# EUROPÄISCHE PATENTSCHRIFT

(11) **EP 1 624 738 B1**
(45) Veröffentlichungstag und Bekanntmachung des Hinweises auf die Patenterteilung: **15.08.2007**
(21) Anmeldenummer: 05105857.6
(22) Anmeldetag: 30.06.2005
(51) Int. Cl.: H05K 5/00, H05K 5/02, H02B 1/50, H02G 9/10

(54) **Schutzvorrichtung für Verteilerschränke**
Protective device for distribution cabinets
Dispositif de protection pour armoires de distribution

(30) Priorität: 06.08.2004 DE 102004038365
(43) Veröffentlichungstag der Anmeldung: 08.02.2006
(73) Patentinhaber: Berthold Sichert GmbH, 12277 Berlin (DE)
(72) Erfinder: Günter Irmer, 13055 Berlin (DE); Helmut Perschon, 12277 Berlin (DE)
(74) Vertreter: Alber, Norbert

(56) Entgegenhaltungen:
- EP-A- 0 590 286
- EP-A- 0 849 850
- DE-U- 7 319 283
- FR-A- 2 776 850

## Beschreibung

### I. Anwendungsgebiet

Die Erfindung betrifft einen Telekommunikations-Verteilerschrank (KVZ) gemäß dem Oberbegriff des Anspruchs 1 sowie ein Verfahren zum Nachrüsten eines Telekommunikations-Verteilerschranks (KVZ) gemäß dem Anspruch 7.

### II. Technischer Hintergrund

Ein derartiger Verteilerschrank ist z.B. aus der DE 73 19 283 U bekannt und besteht im Wesentlichen aus einem Sockel mit einem Sockelgehäuse und einem Schrankgehäuse, welches auf dem Sockelgehäuse angeordnet ist. Verteilerschränke des bekannten Typs stehen in großer Anzahl auf Fußwegen und im öffentlichen Raum, und enthalten die elektrisch notwendigen Ausstattungen, um ein Gebiet in der Umgebung des Verteilerschrankes an ein Telekommunikationsnetz anzuschließen.

Zu diesem Zweck führen Erdkabel von unten über einen hohlen Sockel mit Sockelgehäuse, das inzwischen fast immer aus Kunststoff besteht, in das Innere eines darauf aufgesetzten Verteilerschrank-Gehäuses, von wo aus die Verschaltung und Verteilung zu den einzelnen Hausanschlüssen erfolgt, gegebenenfalls unter zusätzlicher Anordnung von Verstärkern, Kontroll- und Prüfgeräten etc.

Sicherheitsdienste und Überwachungsfirmen, die ein Notfallmeldesystem bei ihren Kunden installieren, erhalten derartige automatisierte, mit Glasbruchmeldern, Bewegungsmeldern oder ähnlichem automatisch erzeugte Notfallmeldungen ebenfalls über das Telekommunikationsnetz, und fahren dann sofort zu dem Firmengelände etc. ihres Kunden, um nach den Rechten zu sehen.

Deshalb sind in letzter Zeit verstärkt Einbrüche vor allem in Firmen registriert worden, bei denen vor dem eigentlichen Einbruch die in der Umgebung dieses Firmengeländes vorhandenen Telekommunikations-Verteilerschränke aufgebrochen und die in den Verteilerschrank hineinführenden Erdkabel durchtrennt wurden, um die automatische Alarmierung der Polizei oder des Sicherheitsdienstes aufgrund des Einbruches zu unterbinden.

Dabei sind die Täter in der Regel so vorgegangen, dass das aus Kunststoff bestehende Sockelgehäuse zerstört oder geöffnet wurde, und durch diese Öffnung hindurch das im Sockelgehäuse nach oben führende Erdkabel ergriffen und durchtrennt wurde.

Da es sich bei den Erdkabeln nicht mehr wie früher um dicke Kupferkabel handelt, die nur zersägt werden konnten, sondern um dünne Kabel, häufig sehr dünne Lichtleiterkabel, kann dies mit einem Handgriff und einem simplen Seitenschneider auf einfache Art und Weise geschehen, wofür auch nur ein relativ kleines Loch im Sockelgehäuse benötigt wird.

Natürlich darf aus Sicht des Einbrechers weder das Aufbrechen des Verteilerschrankes noch dessen bleibende Beschädigung zu schnell bemerkt werden, da sonst Passanten etc. sofort die Polizei informieren.

Der Aufbruch des Verteilerschrankes muss daher schnell vor sich gehen und die Beschädigung soll nach Möglichkeit unbemerkt bleiben, also z.B. von der nicht einsehbaren Rückseite oder zumindest nicht der Frontseite her erfolgen, weshalb trotz der in der Frontseite des Sockelgehäuses immer vorhandenen Sockelklappe die Beschädigung häufig an den Seitenflächen oder der Rückseite erfolgte, trotz des größeren Aufwandes.

Der ebenfalls mögliche Aufbruch des auf dem Sockelgehäuse stehenden Verteilerschrank-Gehäuses wäre zwar aus Sicht des Einbrechers ebenfalls möglich, und teilweise mit geringerem Aufwand als der Zugang durch das Sockelgehäuse, jedoch steht er dann vor dem Problem, aus einer Vielzahl von Leitungen gezielt diejenige Leitung auswählen zu müssen, die zu der gewünschten Firma führt, in welche eingebrochen werden soll.

Ein Durchgreifen vom oberen Bereich nach unten in den Sockelbereich ist jedoch in der Regel nicht möglich, wegen des dazwischen angeordneten Bodenbleches, durch welche die Kabel abgedichtet hindurchgeführt sind.

Im Sockelbereich stellt sich dieses Problem nicht, da das eine oder die wenigen von unten nach oben führenden Kabel allesamt durchtrennt werden können.

### III. Darstellung der Erfindung

### a) Technische Aufgabe

Es ist daher die Aufgabe gemäß der Erfindung, einen Telekommunikations-Verteilerschrank zu schaffen, der durch einfache Mittel gegen ein gewaltsames Eindringen in das Innere des Sockelgehäuses gesichert ist, sowie ein Verfahren für ein nachrüstbares Sichern der Sockelgehäuse von Telekommunikations-Verteilerschränken zu schaffen.

### b) Lösung der Aufgabe

Diese Aufgabe wird durch die Merkmale der Ansprüche 1 und 7 gelöst. Vorteilhafte Ausführungsformen ergeben sich aus den Unteransprüchen.

Durch die Anordnung einer schlag- und bruchfesten Schutzhülle um den Umfang des Sockelgehäuses herum, und zwar vorzugsweise mit einem möglichst geringen Abstand um die Schutzhülle herum, wird verhindert, dass das Sockelgehäuse durch Schläge von außen zerstört oder ein Loch in das Sockelgehäuse hineingeschlagen werden kann, da derartige Schläge von der z. B. aus Stahlblech bestehenden Schutzhülle stark gemindert werden. Eine solche Stahlblech-Schutzhülle kann zwar durch Schläge mit einem großen Hammer notfalls verbeult werden, und dadurch kann der Kunststoffsockel dahinter unter Umständen brechen, aber ein Hineinschlagen eines Loches in eine solche bruchfeste Schutzhülle z.B. aus Stahlblech ist kaum möglich.

Zu diesem Zweck muss die Schutzhülle die bei einem aufgebauten Verteilerschrank sichtbaren und zugänglichen Außenflächen des Sockelgehäuses komplett abdecken, also in der Aufsicht betrachtet vollständig um das Sockelgehäuse umlaufend, insbesondere ohne eine Lücke, Fuge oder andere Unregelmäßigkeit an dem Umfang der Schutzhülle, an welchem ein Werkzeug als Hebel etc. angesetzt werden könnte, und in der Höhe über die gesamte sichtbare Höhe des Sockelgehäuses. Da der Sockel teilweise in den Untergrund hineinreicht, ist es hier in der Regel ausreichend, die Schutzhülle bis zur Erdoberfläche, also der Erdgleiche, herabreichen zu lassen. Im Idealfall reicht die Schutzhülle jedoch in den Erdboden mit hinein und ist genauso hoch wie das Sockelgehäuse selbst.

Die Oberkante des Sockelgehäuses sollte ebenfalls noch abgedeckt sein, und vorzugsweise auch die horizontale Kontaktfläche bzw. Fuge zwischen dem oberen Bereich des Sockelgehäuses und der darauf aufgesetzten Gehäuse des Verteilerschranks bzw. der zunächst bei vielen Konstruktionen auf dem Sockelgehäuse aufgesetzten Bodenplatte, auf welcher dann erst das Gehäuse des Verteilerschrankes ruht.

Durch die Anordnung der Schutzhülle wenigstens teilweise, vorzugsweise über den Umfang durchgehend, noch innerhalb der Außenkontur des Schrankgehäuses ist sichergestellt, dass das aufgesetzte Schrankgehäuse selbst durch Formschluss ein Abziehen der Schutzhülle vom Sockelgehäuse nach oben verhindert.

Die Zeit sowie die technischen Fähigkeiten, das Schrankgehäuse komplett zu entfernen und erst danach die Schutzhülle des Sockelgehäuses zu entfernen, hat ein Einbrecher in aller Regel nicht, vor allem wenn man bedenkt, dass die Einbrecher für z.B. einen Gewerbebetrieb nicht nur einen sondern mehrere derartige Verteilerschränke, die sich in der Umgebung des Einbruchsobjektes befinden, zuvor lahm legen müssen, da sie nicht wissen, in welchem dieser Telekommunikations-Verteilerschrank (KVZ) sich der Hausanschluss für das Einbruchsobjekt befindet.

Um die Schutzhülle möglichst stabil und dennoch kostengünstig auszubilden, ist sie beispielsweise als einstückiges Schweißteil ausgebildet. Theoretisch ist natürlich auch eine Blechausführung in einem anderen Metall wie Edelstahl oder Aluminium denkbar, jedoch sind dann die entsprechenden Nachteile (höhere Kosten, geringer mechanischer Widerstand etc.) in Kauf zu nehmen.

Sofern ausreichend schlagfeste Kunststoffe zur Verfügung stehen, kann selbst eine Schutzhülle aus einem solchen speziellen Kunststoff einen ausreichenden Widerstand bieten. Da insbesondere eine in der Aufsicht betrachtet, ringförmig einstückig umlaufende, Schutzhülle nur nachgerüstet werden kann durch Aufschieben über den von dem Gehäuse befreiten Verteilerschrank von oben her, und des weiteren aufgrund von Vorteilen und beim Transport und der Lagerung der Schutzhülle, kann die Schutzhülle auch aus mehreren Teilen bestehen, die entweder gegeneinander oder gegenüber dem Sockelgehäuse fixiert sind. Jedoch ist dann strikt darauf zu achten, dass diese Befestigungsvorrichtungen nicht von außen betätigbar sind und auch keine Fugen oder ähnliche Zugangspunkte aufweisen, die das Ansetzen eines Hebels und Aufhebeln der Befestigungsvorrichtung unter in Kaufnahme deren Zerstörung ermöglicht.

All dies ist bei einem einstückigen Schweißteil, welches eine glatte, durchgehende Außenfläche aufweist, nicht möglich.

Eine solche einstückige Schutzhülle hat jedoch den Nachteil, dass dadurch auch die in der Vorderfläche des Sockelgehäuses vorhandene Sockelklappe nicht mehr zugänglich ist, die dort vorhanden ist, um ohne Öffnen des Gehäuses und dessen Schranktür bzw. überhaupt einen Zugang in den Innenraum des Sockelgehäuses für einen Monteur zu ermöglichen.

Soll dies weiterhin gewährleistet werden, muss an der entsprechenden Stelle auch die Schutzhülle eine verschließbare Öffnung von mindestens gleicher Größe aufweisen, die im Normfall durch eine Frontplatte verschlossen ist.

Zum einen muss wiederum darauf geachtet werden, dass am Übergang zwischen Frontplatte und der restlichen Schutzhülle im geschlossenen Zustand der Frontplatte wiederum möglichst keine Vorsprünge, Kanten, Fugen oder andere Ansatzmöglichkeiten für ein Werkzeug gegeben sind.

Eine sehr einfache und kostengünstige und dennoch sichere Konstruktion lässt sich dadurch erzielen, dass die Frontplatte von oben her mit ihren seitlichen vertikalen Kanten in entsprechende Führungen eingeschoben werden kann, die an dem Rest der Schutzhülle einstückig angeschweißt sind, wobei das Herausziehen der Frontplatte nach oben wiederum dadurch verhindert wird, dass über die Oberkante der eingeschobenen Frontplatte radial nach außen das vorhandene Schrankgehäuse vorsteht.

Wenn dabei die Führungen auf der Innenseite der vorhandenen restlichen Schutzhülle, also der vorderen Hüllwand, angeordnet sind, können die Führungen nicht aufgehebelt werden. Vorzugsweise weist die Frontplatte selbst in der Aufsicht betrachtet eine solche Kröpfung auf, dass ihre Außenfläche mit der Außenfläche der restlichen Schutzhülle im geschlossenen Zustand fluchtet.

Weiterhin sollte vorzugsweise die von der Frontplatte zu verschließende Öffnung in der Schutzhülle eine von Material der Schutzhülle vollständig umschlossene Öffnung sein, und keine Lücke im Umfang der Schutzhülle, um ein auseinander ziehen von Schutzhülle und eingeschobener Frontplatte in Umfangsrichtung zu verhindern, was ansonsten konstruktiv nur durch einen entsprechenden Hinterschnitt und damit eine aufwendigere Konstruktion sowohl der Führungen als auch des hineingreifenden Randes der Frontplatte möglich wäre.

Vorzugsweise reicht vor allem die nach oben herausziehbare Frontplatte in Querrichtung nicht über die Breite der Tür des Schrankgehäuses hinaus, und wird durch diese Tür gegen ein Herausziehen nach oben gesichert. Dies hat den Vorteil, dass auch ohne Abnehmen des gesamten Gehäuses, sondern nur durch öffnen der Schranktür, es möglich wird, die darunter befindliche Frontplatte nach oben aus ihren Führungen der Schutzhülle herauszuziehen und zu entfernen. Der Monteur, der berechtigterweise Zugang zum Innenraum im Sockelgehäuse benötigt, hat einen Schlüssel und kann die Schranktür des Gehäuses öffnen, dadurch die Frontplatte in der Schutzhülle des Sockels nach oben herausziehen, und dann die Frontklappe im normalen Sockelgehäuse wie gewohnt zu öffnen, um in den Innenraum des Sockels zu gelangen.

Er braucht hierzu keinen weiteren Schlüssel außer dem Schlüssel zum Öffnen der Schranktür des Gehäuses, so dass auch das Vorhalten und Verwalten zusätzlicher Schlüssel und Schlösser, Kodierungen oder Ähnlichem nicht möglich ist.

Die Fixierung der Schutzhülle gegenüber dem Sockel wird am einfachsten durch Formschluss erzielt, also ohne zusätzliche Befestigungselemente etc.

In Querrichtung verläuft die gesamte Schutzhülle ohnehin möglichst eng anliegend am Außenumfang des Sockelgehäuses und wird dadurch in der Horizontalen in beide Richtungen fixiert, gegebenenfalls auch durch einen nach innen ragenden freien Rand der Schutzhülle, der zentriert wird durch einen entsprechend außen umlaufenden Rand eines der Bauteile des Verteilerschrankes.

In der Vertikalen erfolgt die Fixierung vorzugsweise durch einen von der Oberkante der Hüllwände der Schutzhülle nach innen ragenden Flansch in Form einer Kröpfung der Hüllwand, der vorzugsweise ebenfalls in der Aufsicht betrachtet umlaufend durchgehend oder annähernd durchgehend ausgebildet ist.

Dieser Flansch liegt im fertig montierten Zustand der Schutzhülle auf einer nach oben gerichteten Anschlagfläche des Sockelgehäuses oder eines anderen Bauteiles des Verteilerschrankes auf und wird in Anlage daran gehalten durch ein darüber angeordnetes weiteres Bauteil.

Bei den meisten Bauformen von Verteilerschränken ist auf der Oberseite des Sockelgehäuses eine Bodenplatte montiert, die in der Aufsicht betrachtet nur geringfügig vom äußeren Rand des Sockelgehäuses nach innen zurückversetzt endet, und von diesem eigenen äußeren Rand wiederum nach innen versetzt einen nach oben aufstrebenden Rand aufweist. Im radialen Bereich dazwischen und außen um den Rand herum erfolgt anschließend das Aufsetzen des Gehäuses des Verteilerschrankes.

Vorzugsweise ist die Schutzhülle so dimensioniert, dass anstelle des Schrankgehäuses zunächst der nach innen ragende Flansch am oberen Ende der Schutzhülle auf diesen außerhalb des aufragenden Randes nach außen ragenden Bereich der Bodenplatte aufliegt, und dort durch das anschließend aufgesetzte und gegenüber der Bodenplatte fixierte Gehäuse formschlüssig in vertikaler Richtung gehalten wird. In horizontaler Richtung erfolgt zusätzlich eine Fixierung, in dem die freie innere Kante des Flansches der Schutzhülle durch die außen umlaufende Fläche des Randes gehalten wird.

Auf diese Art und Weise ist die Schutzhülle komplett fixiert allein durch Aufsetzen und Verbinden des Gehäuses auf der Bodenplatte, welche ihrerseits wiederum mit dem Sockelgehäuse fest verbunden, insbesondere verschraubt ist. Auch das Aufnahmegestell, an welchem die elektrischen Einbauten montiert sind, ist auf dieser Bodenplatte montiert.

Ein weiterer Vorteil dieser Gestaltung liegt darin, dass durch die Hüllwände der Schutzhülle in vertikaler Richtung auch die Kontaktfläche bzw. Fuge zwischen der Unterseite der Bodenplatte und der Oberseite des Sockelgehäuses überdeckt wird, die ansonsten dazu benutzt werden könnte, durch Aufhebeln vergrößert zu werden und dann mittels eines eingeschobenen dünnen Sägeblattes etc. die Erdkabel zu durchtrennen.

Die Höhe des Bereichs der Bodenplatte, welcher von der Schutzhülle dazu zusätzlich übergriffen wird, kann dazu führen, dass die Schutzhülle in der vertikalen Richtung sogar höher ist als das Sockelgehäuse selbst.

Durch die vorgeschriebene Konstruktion ist es möglich, vorhandene Verteilerschränke mit der schlag- und bruchfesten Schutzhülle schnell und einfach nachzurüsten, ohne den Verteilerschrank abschalten zu müssen:
Zuerst erfolgt vom Monteur das Öffnen der Schranktür des Schrankgehäuses, um in den Innenraum des Schrankgehäuses zu gelangen, und dort die Verbindungen zwischen Schrankgehäuse und dem Rest des Schrankes, also einerseits der Bodenplatte und/oder dem Aufnahmegestell für die elektrischen Komponenten, lösen zu können.

Anschließend kann das Schrankgehäuse vom Rest des Schrankes aus angehoben und komplett über das obere Ende des Aufnahmegestells abgezogen und entfernt werden. Da die elektrischen Anschlüsse nicht beeinträchtigt werden, kann der Verteilerschrank eingeschaltet bleiben.

Anschließend wird die ringförmig umlaufende, oben und unten jedoch offene, schlagfeste Schutzhülle von oben über das Aufnahmegestell gefädelt und abgelassen, bis die Schutzhülle sich auf der Höhe des Sockelgehäuses in der Endposition befindet, und insbesondere mit ihrem nach innen laufenden Flansch auf der entsprechenden Gegenfläche des Verteilerschrankes, insbesondere dessen Bodenplatte, aufliegt.

In dieser Position sollte die Unterkante der Schutzhülle bis zum Erdboden herabreichen, oder gegebenenfalls nach geringfügigem Aufgraben des Erdbodens bis leicht in den Erdboden hineinragen.

Falls die Schutzhülle eine separate, entfernbare Frontplatte aufweist, wird das Überstülpen ohne die Frontplatte geschehen, und die Frontplatte anschließend montiert, also in der Regel von oben in die entsprechenden Führungen der Schutzhülle eingeschoben werden.

Anschließend erfolgt das Aufsetzen des abgenommen Gehäuses wiederum von oben her durch Überstülpen über das Aufnahmegestell und Aufsetzen auf den Randflansch der Bodenplatte, wo sich jetzt bereits der nach innen ragende Flansch der Schutzhülle befindet, der dadurch zwischen dem unteren Rand des Gehäuses und der Oberseite des Randflansches der Bodenplatte fixiert, insbesondere geklemmt, wird.

Anschließend wird - wiederum bei geöffneter Tür des Gehäuses - vom Monteur wiederum die notwendige feste mechanische Verbindung des Gehäuses einerseits mit der Bodenplatte und andererseits mit dem Aufnahmegestell hergestellt, unter Umständen auch die entfernte Erdung am Gehäuse wieder angeschlossen.

Nach dem Schließen der Tür des Gehäuses befindet sich der Verteilerschrank wieder im Ausgangszustand, abgesehen von der jetzt vorhandenen Schutzhülle um das Sockelgehäuse herum.

### c) Ausführungsbeispiele

Ausführungsformen gemäß der Erfindung sind im Folgenden anhand der Figuren beispielhaft näher beschrieben. Es zeigen:
- Fig. 1:: Nachrüstung des Sockels mit einer geschlossenen Schutzhülle,
- Fig. 2:: Nachrüstung mit einer Schutzhülle mit Frontplatte, und
- Fig. 3:: die Anordnung im Vertikalschnitt

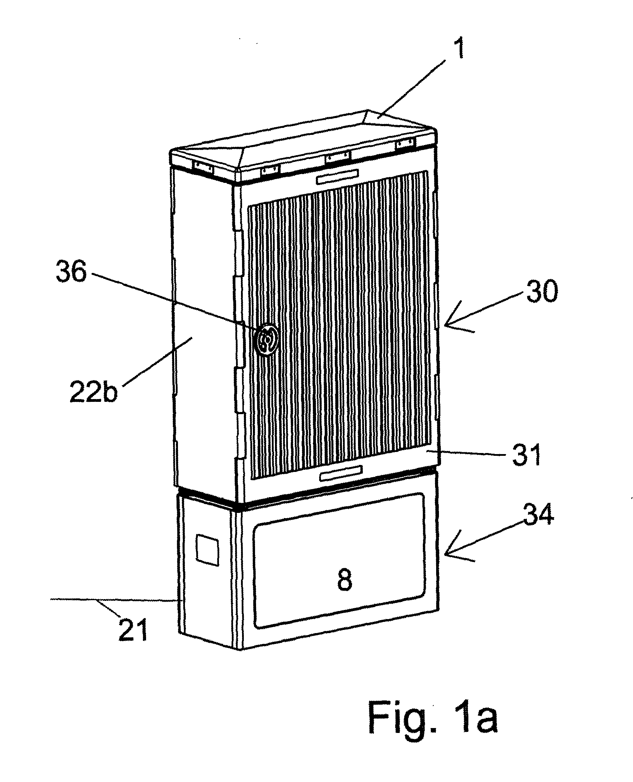

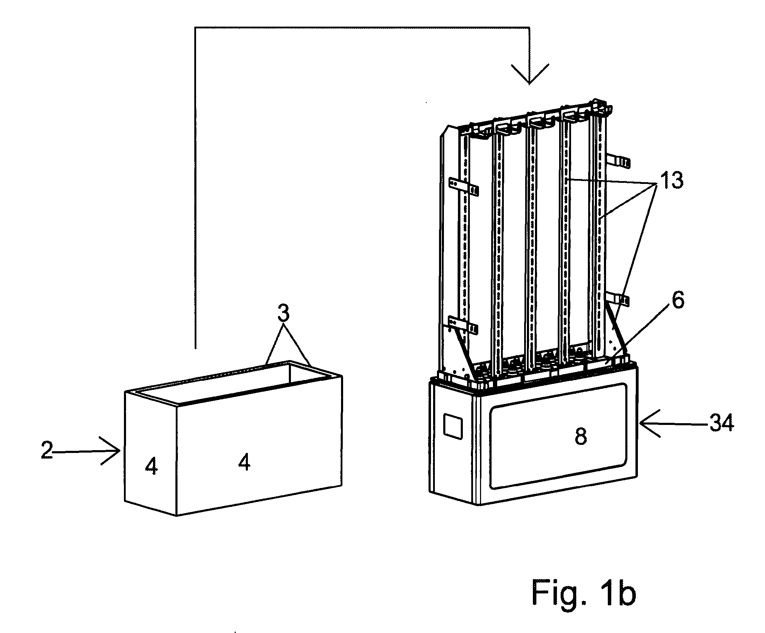

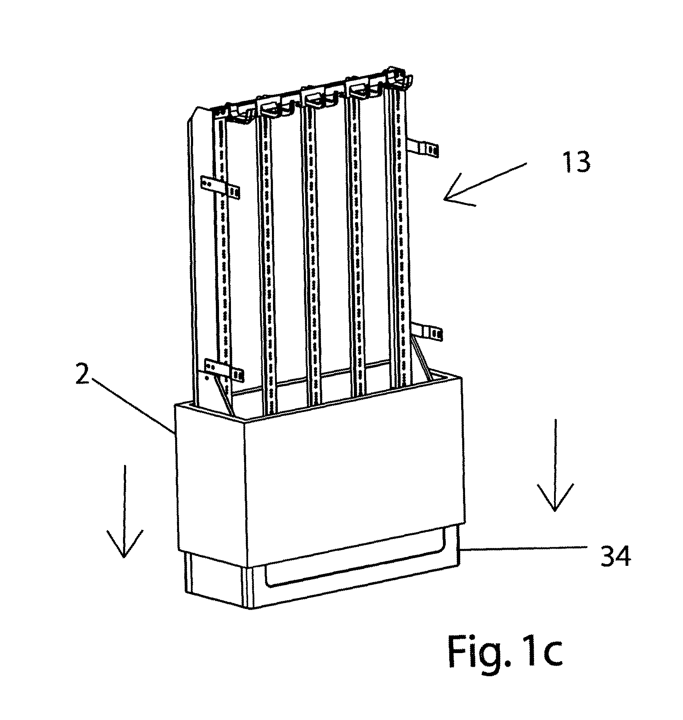

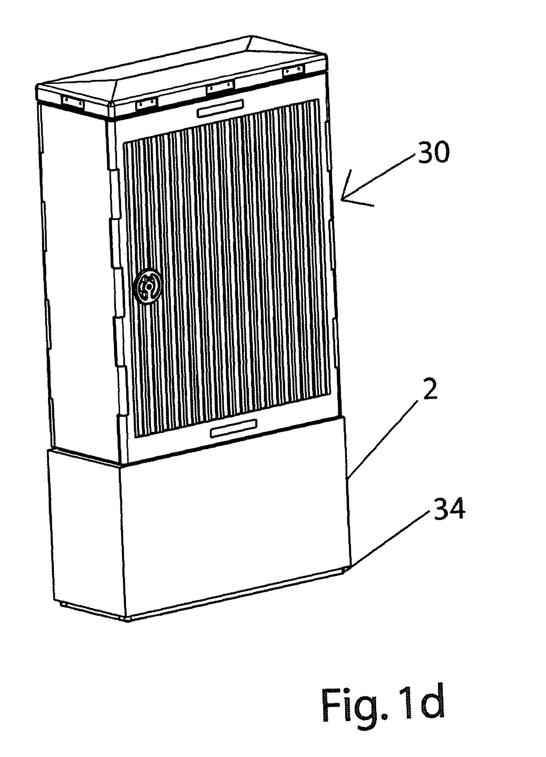

Fig. 1 zeigt den Verteilerschrank, wie er vor der Umrüstung im Einsatz zu finden ist, bestehend aus einem in der Aufsicht rechteckigen Sockelgehäuse 34, das teilweise aus dem Erdboden nach oben über die Erdgleiche 21 vorsteht, und einem darauf aufgesetzten, in der Aufsicht ebenfalls rechteckigen, Schrankgehäuse 30, bestehend aus Seitenwänden z.B. 22b und mindestens einer Schranktür 31, wobei das Gehäuse auf der Oberseite mittels eines aufgesetzten Daches 1, im wesentlichen dicht verschlossen wird.

Dabei kann das Schrankgehäuse nach Lösen der Verbindungen zu den anderen Bauteilen komplett nach oben abgezogen und entfernt werden, so dass dann das Sockelgehäuse 34 auf der Oberseite eine den Querschnitt des Sockelgehäuses 34 verschließenden Bodenplatte 6 vorhanden ist, und auf dieser ein nach oben aufregendes Aufnahmegestell 13, an welchem - in den Figuren nicht dargestellt - bei einem funktionierenden Verteilerschrank die notwendigen elektrischen Ausbauteile befestigt sind, also Klemmvorrichtungen, Sicherungen, Zusatzverstärker usw.

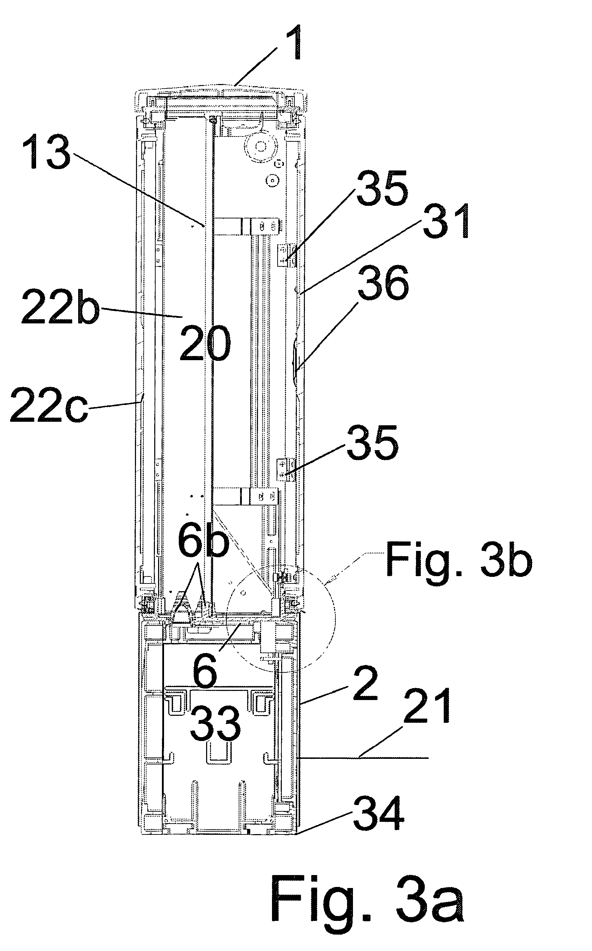

Wie am besten die ebenfalls ohne elektrische Ausstattung dargestellte Fig. 3a zeigt, sind in der Bodenplatte 6 in der Regel EMV-dichte Kabeldurchlässe 6a vorhanden, um Erdkabel, die durch die offene Unterseite in den Innenraum 33 des Sockelgehäuses geführt werden, von dort aus durch die Kabeldurchlässe 6a nach oben in den Innenraum 20 des Gehäuses zu führen, und mit der dort am Aufnahme-Gestell vorhandenen elektrischen Ausstattungen zu verbinden.

Wenn gemäß Fig. 1 b das Schrankgehäuse 30 entfernt ist, ist der Schrank prinzipiell immer noch funktionsfähig, und muss auch nicht unbedingt abgeschaltet werden, da der elektrische Ausbau nach wie vor mit Erdkabeln verbunden ist und seine Funktion verrichtet.

Die Figuren 1a und 1b zeigen ferner die großflächige Sockelklappe 8 in der Vorderfront des Sockelgehäuses 34, die es ermöglicht, an die Kabel im Bereich des Innenraums 33 des Sockelgehäuses 34 zu gelangen, was ja selbst nach Öffnen der Tür 31 des Gehäuses 30 nicht möglich ist wegen der Abschottung nach unten durch die Bodenplatte 6.

In Fig. 1 b ist neben dem Verteilerschrank die Schutzhülle 2 als separates Bauteil dargestellt, die in der Aufsicht betrachtet aus rechteckig umlaufenden Hüllwände besteht, und deren Ober- und Unterseite offen ist, so dass diese Schutzhülle über das mit den elektrischen Ausstattungen versehene Aufnahmegestell 13 gefädelt und nach unten abgelassen werden kann, bis die Hüllwände 4 der Schutzhülle 2 das Sockelgehäuse 34 umgeben.

Dementsprechend ist der Innenumfang der durch die Hüllwände 4 gegebenen Schutzhülle 2 nur geringfügig größer als der Außenumfang des Sockelgehäuses 34, und die Höhe der Schutzhülle 2 ist nur geringfügig kleiner als die des Sockelgehäuses 34.

Am oberen Rand der Schutzhülle 2 weist von der Oberkante der Hüllwände 4 ein Flansch 3 nach innen, vorzugsweise durchgehend umlaufend, mit der die Schutzhülle 2 auf einer entsprechenden Gegenfläche, entweder der Oberkante des Sockelgehäuses 34 oder der darauf befestigten Bodenplatte 6, aufliegt und dadurch in der Höhenlage fixiert wird. In dieser Endlage reicht die Unterkante der Schutzhülle 2 bis auf den Erdboden hinab oder sogar noch darüber hinaus in den Erdboden hinein.

In dieser Endlage wird die Schutzhülle 2 entweder fixiert durch Verschrauben, insbesondere des Flansches 3 gegenüber der Bodenplatte 6 und/oder dem Sockelgehäuse 34, und/oder formschlüssig gehalten durch das anschließend wieder gemäß Fig. 1d von oben über das Aufnahmegestell 13 aufgestülpte Schrankgehäuse 30.

Nunmehr ist das relativ leicht beschädigbare und zerstörbare Sockelgehäuse 34, das ja meist aus Kunststoff besteht, und in dem man deshalb bereits mit einem normalen Hammer ein Loch schlagen kann, auf allen Außenseiten von einer Schutzhülle 2 aus Stahlblech oder einem anderen harten und widerstandsfähigen Material umgeben. Wollte man hier ebenfalls ein Loch einbringen, müsste man schweres Werkzeug, also Schneidbrenner, Flex, oder ähnliches zur Verfügung haben, so dass selbst mit einem schweren Vorschlaghammer diese Schutzhülle zwar verbeult aber kaum durchschlagen werden kann.

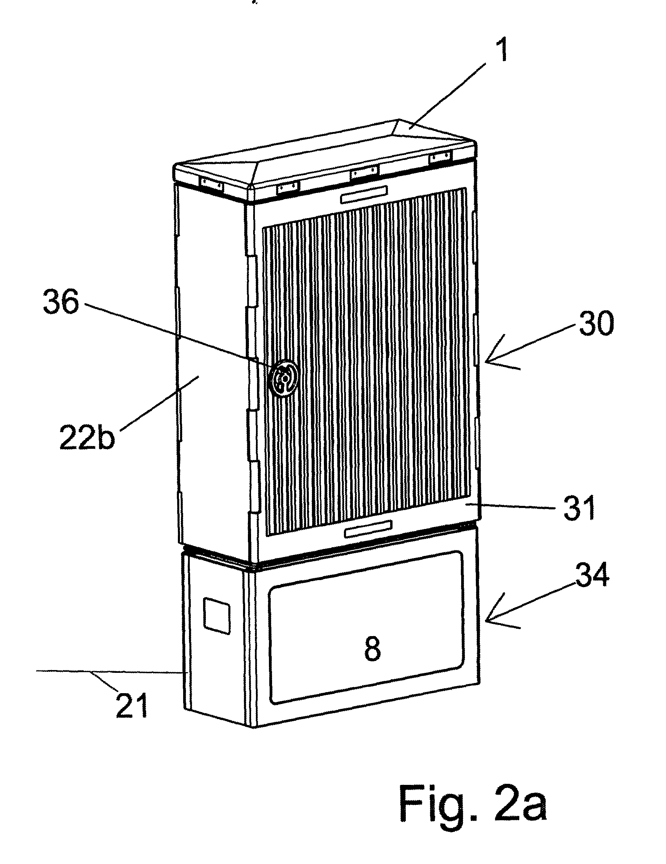

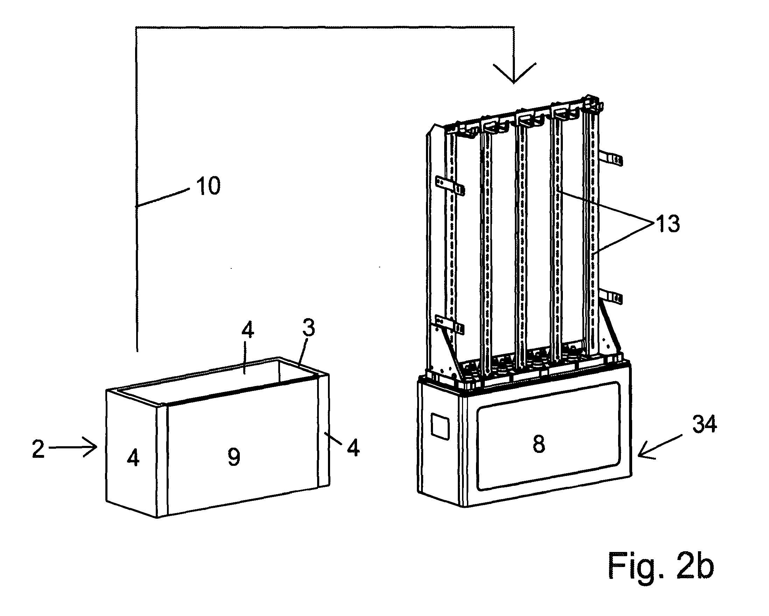

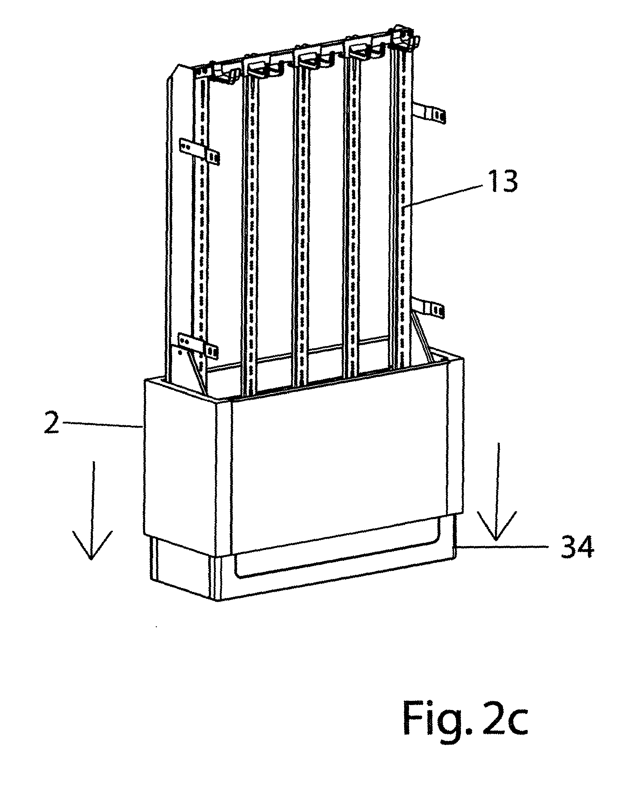

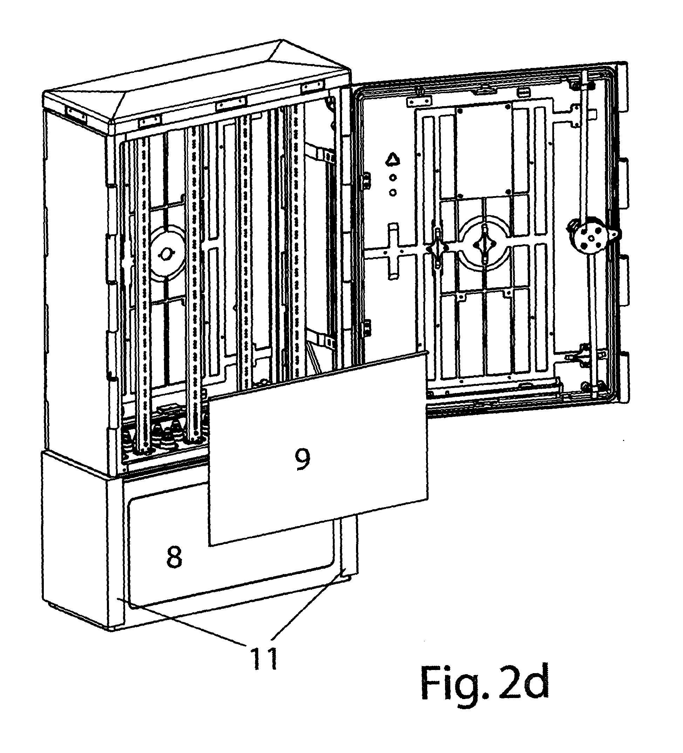

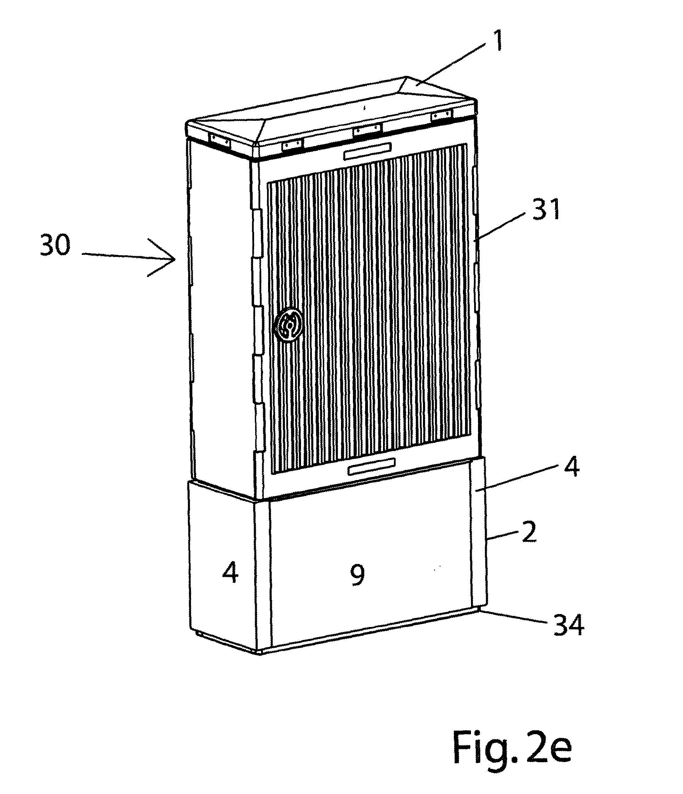

Die Fig. 2 zeigen einen Umrüstablauf der im Prinzip genauso abläuft wie bei den Fig. 1, bei dem jedoch in der vorderen Hüllwand 4 der Schutzhülle 2 eine großflächige Öffnung vorhanden ist, die von einer Frontplatte 9 verschlossen wird.

Das Umrüsten geschieht genauso wie in den Fig. 1, wobei die Schutzhülle 2 mit oder ohne der Frontplatte 9 über das Aufnahmegestell gefädelt und über das Sockelgehäuse 34 gestülpt werden kann, wobei in den Fig. 2b und 2c das Überstülpen der Schutzhülle 2 zusammen mit der Frontplatte 9 dargestellt ist.

Diese kann jedoch auch erst nach dem Auffädeln und Überstülpen der Schutzhülle 2 über das Sockelgehäuse 34 separat eingesetzt werden, was z.B. durch ein Einschieben von oben in entsprechende Führungen der vorderen Hüllwand 4 der Schutzhülle 2 erfolgt.

Diese vordere Hüllwand 4 kann - wie in Fig. 2d dargestellt - zu diesem Zweck in Umfangsrichtung vollständig unterbrochen sein und erst durch das Einschieben der Frontplatte 9 zu einer in der Aufsicht umlaufenden Schutzhülle 2 werden, wobei dann jedoch durch die Ausbildungen der Führungen und der darin eingreifenden vertikalen Seitenkanten der Frontplatte 9 mittels Formschluss etc. darauf zu achten ist, dass ein Auseinanderbewegen der Frontplatte 9 und der übrigen Schutzhülle 2 in Querrichtung auch mittels Werkzeug nicht möglich ist.

Eine bevorzugte Lösung besteht deshalb darin, in der vorderen Hüllwand lediglich einen großflächigen Ausschnitt anzuordnen, aber am oberen und unteren Rand diese Hüllwand 4 durchgehen zu lassen. Der Durchbruch kann wiederum verschlossen werden durch Einschieben der Frontplatte 9 von oben, so dass sie im vollständig eingeschobenen Zustand mit der Oberkante der Schutzhülle 2 abschließt und dabei in Anschlägen im unteren Ende der Führung fixiert ist. Vorzugsweise liegt die Frontplatte 9 dabei vor den oben und unten horizontal durchgehenden restlichen Streben der vorderen Hüllwand 4.

Auch dabei ist darauf zu achten, dass die Frontplatte 9 mit dem Rest der Hüllwand 4 möglichst geringe oder keine Fugen bildet, in denen ein Werkzeug eingesetzt werden kann, und vorzugsweise sollte die Außenfläche der Hüllwand 4 mit der Außenfläche der darin eingesetzten Frontplatte 9 fluchten.

Fig. 2d. zeigt, dass das Einschieben der Frontplatte 9 von oben nur möglich ist, wenn bei aufgesetztem Gehäuse 30 die Fronttür 31 komplett geöffnet ist, da ansonsten die Unterkante der geschlossenen Tür 31 die Oberkante der Frontplatte 9 sichert gegen ein Herausschieben nach oben.

Das Einsetzen der Frontplatte 9 ist natürlich auch bei vollständig abgenommenen Gehäuse 9 möglich, also unmittelbar nach Auffädeln der restlichen Schutzhülle 2 und noch bevor das Gehäuse 30 auf den Rest des Verteilerschrankes aufgesetzt wird.

Auf diese Art und Weise können Wartungs- und Montagearbeiten im Innenraum 33 des Sockelgehäuses 34, also an den zugeführten Erdkabeln, den dort an den Kabeln in der Regel vorhandenen Zugentlastungen und Ähnlichem, durchgeführt werden, indem lediglich die Tür 31 des Gehäuses 30 geöffnet und danach die Frontplatte 9 nach oben aus der Schutzhülle 2 herausgezogen wird. Die dann in der Schutzhülle 2 vorhandene Öffnung ist gleich groß oder größer als die darunter liegende Frontklappe 8 des Sockelgehäuses 34, die nunmehr geöffnet werden kann so dass der Zugang zum Innenraum 33 des Sockelgehäuses frei ist.

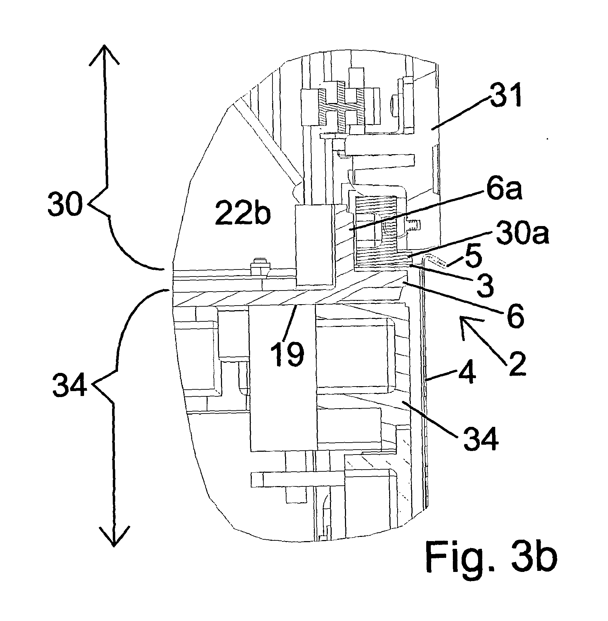

Die Fig. 3 zeigen in einem Vertikalschnitt die konkrete Anordnung und Fixierung einer Schutzhülle 2 aus Stahlblech an einem Verteilerschrank, mit Fokussierung auf einfache und kostengünstige Herstellbarkeit der Schutzhülle 2 und geringem Montageaufwand, trotz hohem Sicherheitswert.

Dabei ist der Vertikalschnitt der Fig. 3a durch den gesamten Verteilerschrank parallel zu einer der schmalen Seitenwände 22b geführt. Das Sockelgehäuse 34 steht nach unten nur geringfügig über die Unterkante der Schutzhülle 2 vor.

Die nicht dargestellten Erdkabel erstrecken sich durch die offene Unterseite in den Innenraum 33 des Sockelgehäuses 34 hinein, von dort durch den EMV-dichten Kabeldurchlass 6a, von denen in der Regel mehrere vorhanden sind, weiter nach oben in den Innenraum 20 des auf dem Sockelgehäuse 34 aufgesetzten Gehäuses, gebildet aus der Rückwand 22c, den schmalen Seitenwänden 22ab und der Tür 31, die über Scharniere 35 an der einen Seitenwand 22b angelenkt und gegenüber der anderen Wand 22a mittels eines Riegels 36, in diesem Fall eines Drehriegels, der von einem Schloss gesichert werden kann, verschließbar ist.

Auf den Umfangswänden sitzt das Dach 1, welches vor allem den Innenraum 20 gegen Regen und Schnee schützen soll. Das im Innenraum 20 vorhandene Aufnahme-Gestell 13 ist auf der Bodenplatte 6 verschraubt und darüber hinaus auch mit dem Gehäuse 30, also dessen Seitenwänden und/oder dem Dach, verbunden.

Fig. 3b zeigt in vergrößerter Detaildarstellung den Übergangsbereich zwischen Sockelgehäuse 34 und Gehäuse 30:

Wie ersichtlich, sitzt auf dem Sockelgehäuse 34 die Bodenplatte 6 auf und ist mit dem Sockel bzw. Sockelgehäuse 34 verschraubt. Sie steht nicht über den Außenumfang des Sockelgehäuses 34 vor und benutzt in ihrem Außenbereich einen nach oben auftragenden Rand 6a.

Da der Rand 6a vom äußersten Rand nach innen zurückversetzt ist, ist ein umlaufender, nach oben weisender, Randbereich an der Bodenplatte 6 vorhanden, auf den das Gehäuse 30 aufgesetzt wird, zentriert durch den aufstrebenden Rand 6a, und welches in der Aufsicht betrachtet seitlich über diesen hinaus vorsteht.

Fig. 3b zeigt, dass die Schutzhülle 2 so dimensioniert ist, dass sich die vertikal erstreckenden Hüllwände 4 in nur geringem Abstand außerhalb des Außenumfanges des Sockelgehäuses 34 in der Endlage befinden, die dadurch definiert ist, dass der nach innen ragende Rand 3 nahe der Oberkante der Hüllwände 4 zwischen die nach oben weisende Auflagefläche im Randbereich der Bodenplatte 6 und der darauf aufsitzenden Unterkante des Gehäuses 30 hineinragt und dazwischen in Vertikalrichtung formschlüssig geklemmt ist.

Auch die Dimensionierung des inneren Randes des Flansches 3 ist so gewählt, dass auch in horizontaler Richtung die Innenkante des Flansches 3 und damit die gesamte Schutzhülle 2 zentriert wird durch die Außenkante des aufragenden Randes 6a der Bodenplatte 6.

Fig. 3b zeigt auch, dass sich die Hüllwand damit noch innerhalb des Außenumfanges des Gehäuses 30, in diesem Fall nämlich der dargestellten Tür 31, befindet.

Vom oberen Rand der Hüllwand 4 aus erstreckt sich deshalb eine Ablaufschräge 5, vorzugsweise aus doppelt gekröpften Blech, um die Verletzungsgefahr zu verringern. Schräg nach unten außen bis über die in der Aufsicht betrachtete Außenkante des Gehäuses 30 hinaus, um Regenwasser nach außen abzuleiten, und dessen Eindringen entlang des Flansches 3 nach innen zu verhindern.

Fig. 3b zeigt ferner, dass die Tür 31 in der Aufsicht betrachtet weiter nach außen vorsteht als die Unterkante 30a des festen Teils des Gehäuses 30, welche insbesondere als Anschlag für die Tür 31 dient. Fig. 3b zeigt ferner, dass die vertikale Hüllwand 4 sich in der Aufsicht betrachtet in den radialen Bereich zwischen der Unterkante 30a des festen Teils des Gehäuses und der Außenseite der Tür 31 befindet.

Wenn also - wie anhand der Fig. 2 erläutert - eine Frontplatte 9 zum Verschließen einer Öffnung in der vorderen Hüllwand 4 in deren Ebene oder nur geringfügig hierzu versetzt angeordnet ist, würde sich diese ebenfalls im radialen Bereich zwischen der Unterkante 30a und der Außenfläche der Tür 31 befinden, so dass eine solche Platte 9 nach Öffnen der Tür 31 nach oben heraus gezogen werden kann.

### BEZUGSZEICHENLISTE

- 1: Dach
- 2: Hülle
- 3: Flansch
- 4: Hüll-Wand
- 5: Ablauf-Schräge
- 6: Bodenplatte
- 6a: Rand
- 6b: EMV-dichter Kabeldurchlass
- 7: Öffnung
- 8: Sockelklappe
- 9: Frontplatte
- 10: Vertikale
- 11: Führung
- 12:
- 13: Aufnahme-Gestell
- 19: Kontaktfläche
- 20: Innenraum im Gehäuse
- 21: Erdgleiche
- 22 a,b,c: Seitenwand
- 30: Schrankgehäuse
- 31: Schrank-Tür
- 32: Offene Oberseite
- 33: Innenraum im Sockel
- 34: Sockel
- 35: Scharnier
- 36: Riegel

## Patentansprüche

1. Telekommunikations-Verteilerschrank (KVZ) aufweisend
- einen Sockel mit einem in Aufsicht betrachtet umlaufenden Sockelgehäuse (34),
- ein darüber angeordnetes Schrankgehäuse (30) mit
- Seitenwänden (22a,b,c),
- wenigstens einer Schranktür (31) und
- einem Dach (1), welches die offene Oberseite (32) des Innenraums (20) im Schrankgehäuse (30) verschließt,
**dadurch gekennzeichnet, dass**
in Aufsicht betrachtet wenigstens entlang der Umfangsfläche des Sockelgehäuses (34) eine umlaufende Schutzhülle (2) aus einem schlag- und bruchfesten Material vorgesehen ist.

2. Verteilerschrank nach Anspruch 1,
**dadurch gekennzeichnet, dass**
- die Hülle (2) als einstückiges Schweißteil ausgebildet ist, oder
- die Hülle (2) aus mehreren Teilen besteht, die gegeneinander und/oder gegenüber dem Sockel (34) fixiert sind mittels Befestigungsvorrichtungen, die entweder nur vom Innenraum (33) im Sockel aus betätigbar sind, oder nur nach Anheben, insbesondere vollständigen Abheben, des Schrankgehäuses (30) vom Sockel (34), und/oder
- sich die Hülle (2) in der Vertikalen (10) nach unten so weit erstreckt, dass sie bei einem im Erdboden verbauten Sockel (34), der nur teilweise über die Erdgleiche (21) hervorsteht, nach unten mindestens bis zur Erdgleiche (21) reicht.

3. Verteilerschrank Anspruch 1 oder 2,
**dadurch gekennzeichnet, dass**
- in vertikaler Richtung die Hülle (2) eine Höhe aufweist, die der Höhe des Sockels (34) entspricht, und/oder
- die Hülle (2) an ihrem oberen Ende wenigstens punktuell, insbesondere im Wesentlichen über den Umfang umlaufend, eine Gestaltung aufweist, die wenigstens in vertikaler Richtung formschlüssig durch die Außenkontur des Sockels (34) und/oder des Schrankgehäuses (30) aufgenommen wird, und/oder
- die Gestaltung der Hülle (2) am oberen Rand einen nach innen ragenden Flansch (3) umfasst, der zwischen Sockel (34) und Schrankgehäuse (30) hineinragt und die Hülle vertikal fixiert, insbesondere auch horizontal fixiert, wird durch Anlegen der freien nach innen weisenden Kante des Flansches (3) an einen Anschlag insbesondere des Schrankgehäuses (30).

4. Verteilerschrank nach einem der vorhergehenden Ansprüche,
**dadurch gekennzeichnet, dass**
- der Telekommunikations-Verteilerschrank (KVZ) eine Bodenplatte (6), insbesondere mit Nahe des Randbereiches nach oben gebogenem Rand (6a), umfasst, mit welchem das restliche Schrankgehäuse (30) verbunden, insbesondere verschraubt ist und
- die Hülle (2) in vertikaler Richtung die horizontale Kontaktfläche (19) bzw. die Fuge zwischen Sockel (34) und Bodenplatte (6) überdeckt und insbesondere der Flansch (3) der Hülle (2) auf einem nach oben gerichteten Absatz der Bodenplatte (6) aufliegt, und/oder
- die freie innere Kante des Flansches (3) in horizontaler Richtung durch die Außenfläche des nach oben aufragenden Randes (6a) der Bodenplatte (6) fixiert wird, und/oder
- die Hülle (2) am oberen Ende umlaufend eine nach außen gerichtete Wasser-Ablauf-Schräge (5) umfasst, die mit ihrem höchsten Punkt knapp unterhalb des Schrankgehäuses (30) beginnt und sich von dort nach unten außen erstreckt, vorzugsweise bis in der Aufsicht betrachtet außerhalb des Umfanges des Schrankgehäuses (30).

5. Verteilerschrank nach einem der vorhergehenden Ansprüche,
**dadurch gekennzeichnet, dass**
- in der vorderen Hüllwand (4) der Hülle (2) eine verschließbare Öffnung (7) vorhanden ist und eine diese Öffnung verschließende Frontplatte (9) ebenfalls aus schlag- und bruchfesten Material, insbesondere Stahlblech, besteht und so angeordnet bzw. montiert ist, dass ein Öffnen durch Unbefugte verhindert wird, und insbesondere
- die Frontplatte (9) als vertikal hochziehbare, in massiven Führungen der Hüllwand (4) geführte Frontplatte (9) ausgebildet ist.

6. Verteilerschrank nach dem vorhergehenden Anspruch,
**dadurch gekennzeichnet, dass**
- die Führungen (11) auf der Innenseite der Hüllwand (4) angeordnet sind, und/oder
- die als Schiebeplatte ausgebildete Frontplatte (9) nur nach oben bewegt werden kann, wenn zumindest die Schranktür (31) des Schrankgehäuses geöffnet ist und/oder das Schrankgehäuse (30) insgesamt abgehoben ist.

7. Verfahren zum Nachrüsten eines Telekommunikations-Verteilerschrankes mit einer Schutzhülle (2), wobei der Verteilerschrank einen Sockel mit einem in Aufsicht betrachtet umlaufenden Sockelgehäuse (34) aufweist, umfassend die folgenden Schritte:
- Öffnen der Schranktür (31) des Schrankgehäuses (30),
- Lösen der Verbindungen zwischen Schrankgehäuse und restlichem Schrank,
- Anheben des Schrankgehäuses (30) bis über das obere Ende des Aufnahmegestells (13) und damit vollständiges Entfernen des Schrankgehäuses,
- Anordnen der Schutzhülle (2) am Sockelgehäuse (34) und Fixieren in der Sollposition, so dass die Schutzhülle (2) das Sockelgehäuse (34) wenigstens in der betrachteten Umfangsrichtung vollständig umhüllt,
- Überstülpen des Schrankgehäuses (30) von oben über das Aufnahmegestell (13) bis in die Ausgangsposition,
- Befestigen des Schrankgehäuses (30) am restlichen Schrank,
- Schließen der Schranktür (31).

8. Verfahren nach dem vorhergehenden Verfahrensanspruch,
**dadurch gekennzeichnet, dass**
- der Schritt des Lösens der Verbindungen zwischen Schrankgehäuse (30) und dem Rest des Schrankes das Lösen der Verbindungen zwischen dem Schrankgehäuse (30) und der Bodenplatte (6) und dem im Innenraum (20) des Gehäuses aufragenden Aufnahmegestell (13) mit den daran befestigten elektrischen Komponenten umfasst, und
- der Schritt des Befestigens des Schrankgehäuses (30) am restlichen Schrank das Befestigen des Schrankgehäuses (30) an der Bodenplatte (6) und/oder dem Aufnahmegestell (13) sowie das Anbringen des Erdungskabels am Schrankgehäuse (30) umfasst.

9. Verfahren nach einem der vorhergehenden Verfahrensansprüche,
**dadurch gekennzeichnet, dass**
- das Anordnen der Hülle durch Überschieben der in der Aufsicht ringförmig geschlossenen Hülle von oben über das Aufnahmegestell (13) und den Sockel (34) erfolgt, insbesondere bis die Hülle (2) mit ihrem oberen nach innen weisenden Flansch (3) auf einem entsprechenden Absatz des Sockels (34) oder insbesondere der Bodenplatte (6) aufliegt, und/oder
- das Anordnen einer mehrteiligen Hülle (2a, 2b) erfolgt durch seitliches, horizontales Ansetzen der Einzelteile, insbesondere zweier in der Aufsicht u-förmiger Einzelteile, und zuvor oder danach Fixieren der Einzelteile gegeneinander insbesondere mittels eines Kopplungselementes und Befestigen des Kopplungselementes und/oder der Teile (2a, 2b) der Hülle (2) gegenüber dem Sockel (34) insbesondere durch formschlüssige Sicherung mittels Einschieben von oben in einer Position, die innerhalb des Außenumfanges des später aufgesetzten Gehäuses liegt, und/oder
- das Fixieren der Hülle formschlüssig erfolgt durch formschlüssige Aufnahme zwischen Gehäuse (30) und den übrigen Teilen des Telekommunikations-Verteilerschranks (KVZ).

10. Verfahren nach einem der vorhergehenden Verfahrensansprüche,
**dadurch gekennzeichnet, dass**
- die Hülle (2) eine Frontplatte (9) aufweist und die Platte (9) nach der Anordnung der Hülle (2) am Sockel (34) an der Hülle (2) fixiert, insbesondere formschlüssig fixiert wird, und insbesondere
- die Schranktür (31) des Schrankgehäuses (30) geöffnet wird,
- die Frontplatte (9) nach oben aus den Führungen (11) an der vorderen Hüllwand (4) der Hülle (2) wenigstens teilweise, insbesondere ganz, herausgezogen wird,
- die dahinter befindliche Sockelklappe (8) des Sockels (34) geöffnet wird.

## Claims

1. A telecommunications distribution cabinet (KVZ) comprising
- a base with a circumferential base housing (34)
- a cabinet housing (30) located above of same, with
- side panels (22 a,b,c),
- at least one cabinet door (31) and
- a top (1), which closes the open upper side (32) of the interior space (20) in the cabinet housing (30),
**characterized in that**
in a view from above, a circumferential protective shell (2) made from an impact resistant and break proof material is provided at least along the circumferential surface of the base housing (34).

2. A distribution cabinet according to claim 1,
**characterized in that**
- the shell (2) is provided as a one piece welded component, or the shell (2) is made from several parts that are interconnected amongst each other and/or fixated to the base (34) through mounting means that can be operated either only from the interior (33) of the base, or only after lifting, in particular after the complete removal of, the cabinet housing (30) from the base (34), and/or
- the shell (2) extends in the vertical direction (10) downward to at least ground level (21), with a base (34) built into the ground, which extends only partially above ground level (21).

3. A distribution cabinet according to claim 1 or 2,
**characterized in that**
- the shell (2) has a height in vertical direction that corresponds to the height of the base (34), and/or
- the shell (2) is provided at its upper end, at least in certain locations, in particular essentially along its circumference, with a shape that is received in a form-locking manner at least in the vertical direction by the exterior contour of the base (34) and/or the cabinet housing (30), and/or
- the configuration of the shell (2) comprises an inward protruding flange (3) at its upper rim, which protrudes inward between base (34) and cabinet housing (30), and thereby secures the shell vertically, in particular also secures it horizontally, by placing the free, inward extending edge of the flange (3) against a stop, in particular of the cabinet housing (30).

4. A distribution cabinet according to one of the preceding claims,
**characterized in that**
- the telecommunications distribution cabinet (KVZ) comprises a base plate (6), in particular with an upwardly curved edge (6a) close its peripheral area, to which the remaining cabinet housing (30) is connected, in particular through threaded bolts, and
- the shell (2) covers the horizontal contact surface (19), or the gap between base (34) and base plate (6) in the vertical direction, and in particular the flange (3) of the shell (2) rests on an upwardly oriented extension of the base plate (6), and/or
- the free inner edge of the flange (3) is secured in horizontal direction by the exterior surface of the upwardly protruding edge (6a) of the base plate (6), and/or
- the shell (2) at its upper edge comprises a circumferential, outward facing, water draining slant (5), which begins with its highest point just below the cabinet housing (30), and extends downward outwardly from there, preferably beyond the circumference of the cabinet encasement (30) as viewed from above.

5. A distribution cabinet according to one of the preceding claims,
**characterized in that**
- a closeable access opening (7) is provided in the front cover pane (4) of the shell (2), and a face plate (9) closing off this opening is also made from impact resistant and break proof material, in particular steel plate, and disposed in such manner as to prohibit opening by unauthorized persons, and in particular
- the front plate (9) is provided as a front plate (9), which can be pulled up vertically and guided in massive guides of the front cover panel (4).

6. A distribution cabinet according to the preceding claims,
**characterized in that**
- the guides (11) are located on the interior side of the front panel (4), and/or
- the front plate (9), which is provided as a slide plate, can only be moved upward, when at least the cabinet door (31) of the cabinet housing is opened, and/or the cabinet housing (30) is lifted off in its entirety.

7. A method for retrofitting a telecommunications distribution cabinet with a protective shell (2), wherein the distribution cabinet, seen in top view, has a base with a circumferential base housing (34), comprising the following steps :
- opening the cabinet door (31) of the cabinet housing (30),
- disengaging the connections between the cabinet housing and the remainder of the cabinet,
- raising the cabinet housing (30) above the upper edge of the mounting frame (13) and thereby complete removal of the cabinet housing,
- applying the protective shell (2) to the base housing (34) and securing it in its nominal position, so that the protective shell (2) envelops the base housing entirely (34), at least in the viewed circumferential direction,
- sliding of the cabinet housing (30) over the mounting frame (13) from above into the initial position,
- securing the cabinet housing (30) to the remainder of the cabinet,
- closing the cabinet door (31).

8. A method according to the preceding method claim,
**characterized in that**
- the step of disengaging the connections between the cabinet hosing (30) and the remainder of the cabinet comprises disengaging the connection between the cabinet housing (30) and the base plate (6) and the mounting frame (13), extending upwards in the interior (20) of the housing, with the electrical components disposed thereupon, and
- the step of securing the cabinet housing (30) to the remainder of the cabinet comprises securing the cabinet housing (30) to the base plate (6) and/or the mounting frame (13), as well as mounting the grounding cable to the cabinet housing (30).

9. A method according to one of the preceding method claims,
**characterized in that**
- positioning the shell is performed through sliding the shell, closed and annular in top view, from above over the mounting frame (13) and over the base (34), in particular to where the shell (2) with its upper, inward extending flange (3) rests upon a corresponding shoulder of the base (34), or in particular of the base plate (6), and/or
- positioning of a multipart shell (2a, 2b) is performed by lateral, horizontal application of the individual components, in particular of two individual components, U-shaped in top view, with prior or subsequent interconnection of the individual parts, in particular via of a coupling element, and mounting the coupling element and/or the parts (2a, 2b) of the shell (2) relative to the base (34), in particular through form locking engagement by means of sliding into a position from above, which is located within the outer circumference of the subsequently placed housing, and/or
- securing of the shell is performed through form-locking reception between the housing (30) and the other components of the telecommunications distribution cabinet (KVZ).

10. A method according to one of the preceding method claims,
**characterized in that**
- the shell (2) comprises a front plate (9), and the plate (9) is secured, in particular in a form locking manner, at the shell (2), after positioning the shell (2) at the base (34), and in particular
- the cabinet door (31) of the cabinet housing (30) is opened,
- the front plate (9) is partially, in particular completely, pulled upward, out of the guides (11) at the front panel (4) of the shell (2),
- the base access hatch (8) of the base (34), disposed behind it, is opened.

## Revendications

1. Armoire de distribution de télécommunication (KVZ) présentant
- un socle avec un coffret de socle (34) circulaire observé en vue de dessus,
- un coffret d'armoire (30) disposé dessus avec
- des parois latérales (22a,b,c),
- au moins une porte d'armoire (31) et
- un toit (1) qui ferme la face supérieure (32) de la chambre interne (20) dans le coffret d'armoire (30),
**caractérisée en ce qu'**
observé en vue de dessus, il est prévu au moins le long de la surface périphérique du coffret de socle (34), une enveloppe de protection circulaire (2) se composant d'un matériau résistant au choc et à la rupture.

2. Armoire de distribution selon la revendication 1, **caractérisée en ce que**
- l'enveloppe (2) est réalisée comme pièce de soudure d'une seule pièce,
- l'enveloppe (2) se compose de plusieurs parties qui sont fixées l'une contre l'autre et/ou en face du socle (34) au moyen de dispositifs de fixation qui ne sont actionnables que depuis la chambre interne (33) dans le socle, soit que par soulèvement en particulier soit par soulèvement complet du coffret d'armoire (30), du socle (34), et/ou
- l'enveloppe (2) s'étend à la verticale (10) vers le bas suffisamment loin de sorte qu'en présence d'un socle (34) ancré dans le sol qui ne fait saillie que partiellement au-dessus du niveau de la terre (21), elle s'étend vers le bas au moins jusqu'au niveau de la terre (21).

3. Armoire de distribution selon la revendication 1 ou 2, **caractérisée en ce que**
- dans la direction verticale, l'enveloppe (2) présente une hauteur qui correspond à la hauteur du socle (34) et/ou
- l'enveloppe (2) présente sur son extrémité supérieure au moins ponctuellement en particulier sensiblement sur la périphérie une forme qui est logée au moins en direction verticale par liaison de forme par le contour externe du socle (34) et/ou du coffret d'armoire (30), et/ou
- la forme de l'enveloppe (2) présente sur le bord supérieur une bride (3) faisant saillie vers l'intérieur qui s'engage entre le socle (34) et le coffret d'armoire (30) et l'enveloppe est fixée verticalement l'armoire, en particulier aussi horizontalement,
- par application du bord libre tourné vers l'intérieur, de la bride (3), contre une butée en particulier du coffret d'armoire (30).

4. Armoire de distribution selon l'une des revendications précédentes, **caractérisée en ce que**
- l'armoire de distribution de télécommunication (KVZ) comprend une plaque de fond (6), en particulier avec un bord (6a) courbé vers le haut à proximité de la zone de bordure bord auquel est relié en particulier vissé le reste du coffret d'armoire (30) et
- l'enveloppe (2) recouvre dans le sens vertical la surface horizontale de contact (1) respectivement le joint entre le socle (34) et la plaque de fond (6), et en particulier la bride (3) de l'enveloppe (2) repose sur un talon dirigé vers le haut de la plaque de fond (6) et/ou
- le bord interne libre de la bride (3) est fixé dans la direction horizontale par la surface externe du bord (6a) faisant saillie vers le haut, de la plaque de fond (6) et/ou
- l'enveloppe (2) comprend sur l'extrémité supérieure de manière circulaire un biseau d'évacuation d'eau (5) dirigé vers l'extérieur qui commence par son point le plus haut juste en dessous du coffret d'armoire (30) et s'étend depuis cet endroit vers le bas à l'extérieur, de préférence jusqu'à l'extérieur de la périphérie du coffre d'armoire (30), observé en vue de dessus.

5. Armoire de distribution selon l'une des revendications précédentes **caractérisé en ce que**
- dans la paroi avant d'enveloppe (4) de l'enveloppe (2), il existe une ouverture fermable (7) et une plaque frontale (9) fermant cette ouverture également en matériau résistant au choc et à la rupture est disposée et montée de sorte qu'une ouverture par des personnes non autorisées est empêchée et en particulier,
- la plaque frontale (9) est réalisée comme une plaque frontale (9) extractible verticalement guidée dans des guides massifs de la paroi d'enveloppe (4).

6. Armoire de répartition selon la revendication précédente, **caractérisé en ce que**
- les guides (11) sont disposés sur la face interne de la paroi d'enveloppe (4) et/ou
- la plaque frontale (9) réalisée comme une plaque coulissante ne peut être déplacée que vers le haut si au moins la porte d'armoire (31) du coffre d'armoire est ouverte et/ou si le coffre d'armoire (30) est soulevé dans son ensemble.

7. Procédé pour l'équipement ultérieur d'une armoire de distribution de télécommunication avec une enveloppe de protection (2), l'armoire de distribution présentant un socle avec un coffret de socle (34) circulaire observé en vue de dessus, comprenant les étapes suivantes :
- ouverture de la porte d'armoire (31) du coffret d'armoire (30),
- Détachement des liaisons entre le coffre d'armoire et le reste de l'armoire,
- soulèvement du coffret d'armoire (30) jusqu'au-dessus de l'extrémité supérieure du bâti de logement (13) et ainsi retrait complet du coffret d'armoire,
- disposition de l'enveloppe de protection (2) sur le coffret de socle (34) et fixation dans la position de consigne de sorte que l'enveloppe de protection (2) entoure le coffret de socle (34) au moins complètement dans la direction périphérique observée,
- placement du coffret d'armoire (30) par le haut sur le bâti de logement (13) jusque dans la position de départ,
- fixation du coffret d'armoire (30) sur le reste de l'armoire,
- fermeture de la porte d'armoire (31).

8. Procédé selon la revendication précédente, **caractérisé en ce que**
- l'étape de détachement des liaisons entre le coffret d'armoire (30) et le reste de l'armoire comporte le desserrement des liaisons entre le coffret d'armoire (30) et la plaque de fond (6) et le bâti de logement (13) s'engageant dans l'intérieur (20) du coffret avec les composants fixés dessus et
- l'étape de fixation du coffret d'armoire (30) sur le reste de l'armoire comprend la fixation du coffret d'armoire (30) sur la plaque de fond (6) et /ou sur le bâti de logement (13) ainsi que l'application du câble de mise à la terre sur le coffret d'armoire (30).

9. Procédé selon l'une des revendications précédentes, **caractérisé en ce que**
- la disposition de l'enveloppe s'effectue par placement de l'enveloppe fermée en forme annulaire en vue de dessus par le haut sur le bâti de logement (13) et le socle (34), en particulier jusqu'à ce que l'enveloppe (2) s'applique sur un talon correspondant du socle (34) ou en particulier de la plaque de fond (6) avec sa bride supérieure (3) dirigée vers l'intérieur , et/ou
- la disposition d'une enveloppe (2a, 2b) en plusieurs partie s'effectuant par application horizontale latérale des parties individuelles, en particulier de deux parties individuelles en forme de U en vue de dessus, et ensuite ou après fixation des parties individuelles l'une contre l'autre en particulier au moyen d'éléments d'accouplement et fixation de l'élément d'accouplement et/ou des parties (2a, 2b) de l'enveloppe (2) en face du socle (34) en particulier par verrouillage des formes au moyen d'une insertion d'en haut dans une position qui se trouve à l'intérieur de la périphérie externe du coffret placé ultérieurement et/ou
- la fixation de l'enveloppe s'effectue par liaison des formes par logement par liaison de formes entre le coffret (30) et les parties restantes de l'armoire de distribution de télécommunication (KVZ).

10. Procédé selon l'une des revendications précédentes, **caractérisé en ce que**
- l'enveloppe (2) présente une plaque frontale (9) et la plaque (9) est fixée après la disposition de l'enveloppe (2) sur le socle (34) sur l'enveloppe (2) en particulier par liaison des formes, et en particulier
- la porte d'armoire (31) du coffret d'arrivée (30) est ouverte,
- la plaque frontale (9) est extraite vers le haut hors des guidages (11) sur la paroi d'enveloppe avant (4) de l'enveloppe (2) au moins partiellement, en particulier entièrement,
- le couvercle de socle (8) du socle (34) se trouvant derrière est ouvert.
